# EUROPÄISCHE PATENTANMELDUNG

(11) **EP 0 984 246 A2**
(43) Veröffentlichungstag der Anmeldung: **08.03.2000**
(21) Anmeldenummer: 99112224.3
(22) Anmeldetag: 25.06.1999
(51) Int. Cl.: G01D 3/02

(54) **Verfahren zur probabilistischen Schätzung gestörter Messwerte**

(30) Priorität: 02.09.1998 DE 19840872
(71) Anmelder: DaimlerChrysler AG, 70567 Stuttgart (DE)
(72) Erfinder: Neumerkel, Dietmar, Dr., 13509 Berlin (DE); Gründer, Thomas, 12679 Berlin (DE)
(74) Vertreter: Breiter, Achim, Dipl.-Ing. (FH)

(57) **Zusammenfassung**

Bei dem Verfahren zur probabilistischen Schätzung gestörter Meßwerte anhand eines Meßsignals, in welchem dem zu messenden Wert ein Störsignal überlagert ist, wird das Meßsignal in vorgegebenen zeitlichen Abständen abgetastet. Ein dem zu messenden Wert zugeordneter definierter Meßbereich wird in diskrete Werte unterteilt, und es wird ein Modell eines dem Meßsignal zugrundeliegenden Prozesses mit diskreten Zuständen, die den diskreten Werten des Meßbereichs entsprechen, gebildet. In dem Modell ist für jeden Abtastzeitpunkt jedem Zustand ein Wahrscheinlichkeitswert seines Auftretens zugeordnet, und der zu messende Wert wird anhand des Wahrscheinlichkeitswertes mindestens eines Zustandes in diesem Modell ermittelt. Weiterhin ist jedem Zustand des Modells in einem Abtastzeitpunkt jeweils eine Wahrscheinlichkeit für das Verbleiben in diesem Zustand sowie für den Übergang in einen anderen Zustand bis zum nächsten Abtastzeitpunkt zugeordnet. Anhand des abgetasteten Wertes des Meßsignals in einem gegenwärtigen Abtastzeitpunkt, der Wahrscheinlichkeitswerte für das Auftreten der Zustände im vorhergehenden Abtastzeitpunkt und der Wahrscheinlichkeitswerte für jeden Zustand für das Verbleiben in diesem Zustand sowie für den Übergang in einen anderen Zustand zwischen den beiden Abtastzeitpunkten werden die Wahrscheinlichkeitswerte für das Auftreten der Zustände des Modells für den gegenwärtigen Abtastzeitpunkt neu berechnet.

## Beschreibung

Die Erfindung betrifft ein Verfahren nach dem Oberbegriff des Anspruchs 1.

Um Meßwertsignale von überlagerten Störsignalen zu befreien, führt man üblicherweise eine Filterung mit einem Hochpaß, Tiefpaß, Bandpaß oder einer Bandsperre durch. Bei einer digitalen Signalverarbeitung werden FIR- oder IIR-Filter eingesetzt, bei denen jedoch je nach Auslegung erhebliche Zeitverzögerungen auftreten.Eine Verringerung der Verzögerung erfolgt auf Kosten der Filterwirkung.

Eine weitere Möglichkeit der Störbefreiung bei Meßsignalen besteht in der Verwendung eines Modells der Störungsstrecke, so daß das Störsignal ohne Nutzsignal erzeugt und vom Meßsignal subtrahiert werden kann, wodurch nur das Nutzsignal erhalten wird. Dieses Verfahren ist üblicherweise jedoch sehr aufwendig, da ein genaues Modell der Störungsstrecke erforderlich ist.

Es ist daher die Aufgabe der vorliegenden Erfindung, ein Verfahren zur probabilistischen Schätzung gestörter Meßwerte anhand eines Meßsignals, in welchem dem zu messenden Wert ein Störsignal überlagert ist, wobei dem zu messenden Wert ein definierter Meßbereich zugeordnet und das Meßsignal in vorgegebenen zeitlichen Abständen abgetastet wird, anzugeben, bei dem eine Unterdrükung des Störsignals auf relativ einfache Weise mit geringer Zeitverzögerung und hohem Wirkungsgrad erzielt werden kann.

Diese Aufgabe wird erfindungsgemäß gelöst durch die im kennzeichnenden Teil des Anspruchs 1 angegebenen Merkmale. Vorteilhafte Weiterbildungen des erfindungsgemäßen Verfahrens ergeben sich aus den Unteransprüchen.

Dadurch, daß der Meßbereich in diskrete Werte unterteilt wird, daß ein Modell eines dem Meßsignal zugrundeliegenden Prozesses mit diskreten Zuständen, die den diskreten Werten des Meßbereichs entsprechen, gebildet wird, bei welchem in jedem Abtastzeitpunkt jedem Zustand ein Wahrscheinlichkeitswert seines Auftretens zugeordnet wird, wobei anhand des Wahrscheinlichkeitswertes mindestens eines Zustandes der zu messende Wert ermittelt wird, daß jedem Zustand des Modells in einem Abtastzeitpunkt jeweils eine Wahrscheinlichkeit für das Verbleiben in diesem Zustand sowie für den Übergang in einen anderen Zustand bis zum nächsten Abtastzeitpunkt zugeordnet wird, und daß anhand des abgetasteten Wertes des Meßsignals in einem gegenwärtigen Abtastzeitpunkt, der Wahrscheinlichkeitswerte für das Auftreten der Zustände im vorhergehenden Abtastzeitpunkt und der Wahrscheinlichkeitswerte für jeden Zustand für das Verbleiben in diesem Zustand sowie für den Übergang in einen anderen Zustand zwischen den beiden Abtastzeitpunkten die Wahrscheinlichkeitswerte für das Auftreten der Zustände des Modells für den gegenwärtigen Abtastzeitpunkt neu berechnet werden, erhält man eine gute Anpaßbarkeit an stochastische und deterministische Eigenschaften des Prozesses und des Sensors sowie auch eine gute Anpaßbarkeit an ein gewünschtes Filterverhalten.

Die Erfindung wird im folgenden anhand eines in den Figuren dargestellten Ausführungsbeispiels näher erläutert. Es zeigen:
- Fig. 1: ein von einem Drehgeschwindigkeitssensor für die Bewegung eines Schienenfahrzeugs aufgenommenes Meßsignal,
- Fig. 2: ein einfaches Modell mit fünf Zuständen für die Krümmung einer als Trasse für Schienenfahrzeuge dienenden Schiene,
- Fig. 3: mehrere Gauß-Funktionen für die Wahrscheinlichkeit des Auftretens der in Fig. 2 dargestellten Zustände bei einem bestimmten Wert des Meßsignals,
- Fig. 4: mit Hilfe des erfindungsgemäßen Verfahrens erzielte Ergebnisse im Vergleich mit den bei einer Standard-IIR-Filterung erhaltenen Ergebnissen,
- Fig. 5: mit Hilfe des erfindungsgemäßen Verfahrens erzielte Ergebnisse im Vergleich mit den bei einer IIR-Filterung bei annähernd gleicher Flankensteilheit erhaltenen Ergebnissen, und
- Fig. 6: ein Diagramm zur Darstellung der hohen Reproduzierbarkeit der Ergebnisse des erfindungsgemäßen Verfahrens.

Im vorliegend beschriebenen Beispiel sollen mit dem erfindungsgemäßen Verfahren die Kurvenkrümmungen einer als Trasse für ein Schienenfahrzeug dienenden Schiene während der Fahrt ermittelt werden. Die Krümmung ist nicht direkt meßbar, sondern kann zum einen dadurch festgestellt werden, daß durch Einsatz von beispielsweise zwei Dopplerradarsensoren die links- und rechtsseitige Fahrzeuggeschwindigkeit aufgenommen und aus der Differenzgeschwindigkeit die Kurvenkrümmung berechnet wird, oder andererseits dadurch, daß mit Hilfe eines Drehgeschwindigkeitssensors (Kreisel) die Winkeländerung des Fahrwerks um seine senkrecht zur Ebene der Trasse verlaufende Drehachse sowie eines Geschwindigkeitssensors die Geschwindigkeit des Fahrzeugs gemessen werden und durch Dividieren der Winkeländerung durch die Geschwindigkeit die Kurvenkrümmung berechnet wird.

Der ermittelte Krümmungswert für den jeweils überfahrenen Schienenabschnitt kann dazu verwendet werden, die Räder des Schienenfahrzeugs mechanisch entsprechend nachzustellen, so daß möglichst wenig Reibung zwischen den Rädern und der Schiene stattfindet. Auch kann bei einem Einzelantrieb der Räder deren Drehgeschwindigkeit abhängig vom Krümmungswert individuell eingestellt werden, so daß kein Schlupf zwischen der Schiene und den Rädern auftritt. Hierdurch wird der Verschleiß von Rädern und Schienen erheblich herabgesetzt und auch die Fahrgeräusche werden bei Kurvenfahrten im Vergleich zu einer Geradeausfahrt nicht erhöht.

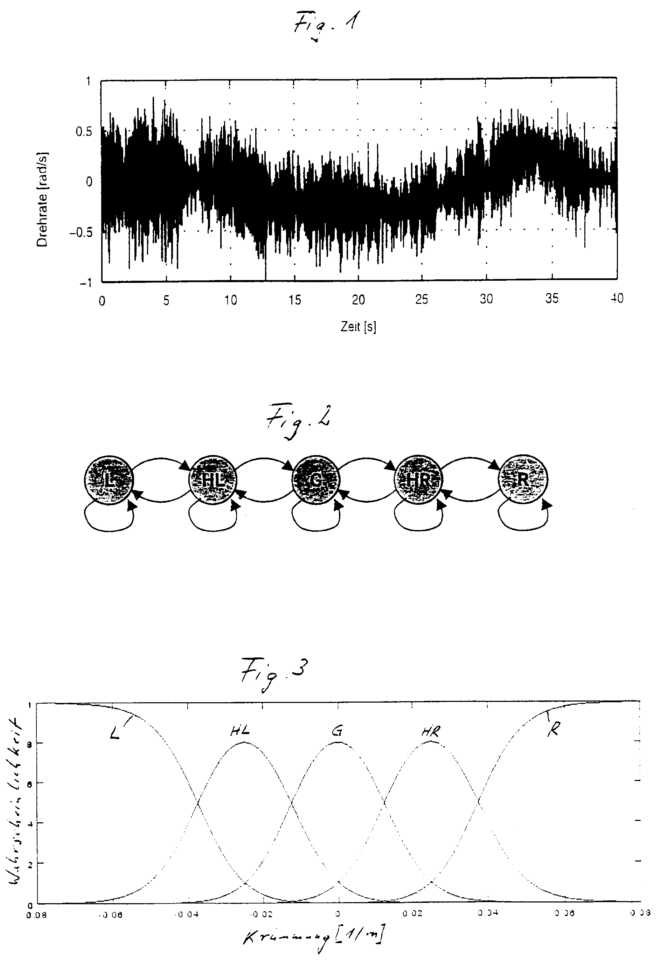

Aufgrund der bei der Fahrt eines Schienenfahrzeuges auftretenden Erschütterungen sind die Ausgangssignale der Geschwindigkeits- und Drehgeschwindigkeitssensoren stark verrauscht. Fig. 1 zeigt beispielhaft das Ausgangssignal eines Drehgeschwindigkeitssensors. Hieraus ist ersichtlich, daß in dem Meßsignal die Störkomponente größer als die Nutzkomponente sein kann, so daß die Ermittlung des Nutzsignals bzw. zu messenden Wertes mit erheblichen Schwierigkeiten behaftet ist.

Ein Beispiel für das beim erfindungsgemäßen Verfahren verwendete Modell zeigt Fig. 2. Auch hier werden mehrere Zustände für die Krümmung einer als Fahrweg für ein Schienenfahrzeug dienenden Schiene zugrundegelegt. Die Zustände überdecken den gesamten möglichen Krümmungsbereich. Im dargestellten Beispiel sind aus Gründen der Vereinfachung nur fünf Zustände angenommen; in Abhängigkeit von der gewünschten Genauigkeit des Ergebnisses der Filterung ist die Anzahl der Zustände üblicherweise jedoch erheblich höher. Die fünf Zustände sind mit "L" (links) , "HL" (halblinks) "G" (geradeaus), "HR" (halbrechts) und "R" (rechts) bezeichnet. Das Modell ordnet für jeden Abtastzeitpunkt jedem Zustand eine bestimmte Wahrscheinlichkeit seines Auftretens zu; beispielsweise betragen in einem bestimmten Abtastzeitpunkt die Wahrscheinlichkeiten für den Zustand L 12 % , den Zustand HL 40 %, den Zustand G 28 %, den Zustand HR 17 % und den Zustand R 3 %.

Pfeile zwischen den einzelnen Zuständen geben die Möglichkeiten eines Übergangs zwischen jeweils zwei Zuständen während eines Intervalls zwischen zwei aufeinanderfolgenden Abtastzeitpunkten an. So kann beispielsweise in einem solchen Zeitintervall der Zustand G erhalten bleiben oder nach HL oder HR wechseln, während ein Übergang von G nach L oder R in diesem Zeitintervall nicht möglich ist. Weiterhin enthält das Modell eine aus Fig. 2 nicht ersichtliche Angabe über die Wahrscheinlichkeit des Übergangs von einem bestimmten Zustand in einen anderen bestimmten Zustand. Beispielsweise kann in einem bestimmten Abtastzeitpunkt die Wahrscheinlichkeit, daß bis zum nächsten Abtastzeitpunkt der Zustand G erhalten bleibt, mit 50 %, daß er in den Zustand HL wechselt, mit 20 %, und daß er in den Zustand HR wechselt, mit 30 % angegeben werden. Wenn die Anzahl der Zustände erheblich größer ist, besteht natürlich auch die Möglichkeit, daß ein Zustand innerhalb eines Abtastzeitintervalls in einen zweitnächsten, drittnächsten, und so weiter Zustand übergeht.

Fig. 3 zeigt die Wahrscheinlichkeit des Auftretens der fünf vorgenannten Zustände für die jeweiligen in den Abtastzeitpunkten erhaltenen Werte des Meßsignals. Jedem Zustand ist eine parametrische Funktion zugeordnet, mit deren Hilfe sich mit dem in jedem Abtastzeitpunkt ermittelten Meßwert die Wahrscheinlichkeit des Auftretens des Zustandes berechnen läßt. Die Abszisse gibt die aus dem Meßsignal ermittelte Krümmung an und umfaßt einen Bereich von -0,08 bis +0,08/m. Die Abhängigkeit der Wahrscheinlichkeiten von dem Meßsignal bzw. der Krümmung entspricht einer Gauß-Funktion. Bei einer Krümmung von 0/m beträgt die Wahrscheinlichkeit, daß der Zustand G (Geradeausfahrt) vorliegt, ca. 80 %, und die Wahrscheinlichkeiten, daß einer der Zustände HL (Halblinks-Fahrt) oder HR (Halbrechts-Fahrt) vorliegt, jeweils etwa 10 %. Die Wahrscheinlichkeiten für eine L- oder R-Fahrt liegen bei 0 %. Hat das Meßsignal beispielsweise einen Wert von +0,02/m, so liegen die Wahrscheinlichkeiten für eine L- oder HL-Fahrt jeweils bei 0 %, die für eine G-Fahrt bei ca. 20 %, die für eine HR-Fahrt bei ca. 75 % und die für eine R-Fahrt bei etwa 5 %.

Um die Modellwerte für einen bestimmten (den jeweils letzten) Abtastzeitpunkt zu ermitteln, werden die Wahrscheinlichkeiten für das Auftreten jedes Zustandes in diesem Zeitpunkt durch Verknüpfung der Wahrscheinlichkeitswerte für alle Zustände im vorhergehenden Abtastzeitpunkt, der Wahrscheinlichkeitswerte für das Verbleiben eines Zustands und des Übergangs eines Zustands in einen anderen Zustand zwischen diesen beiden Abtastzeitpunkten sowie der aus dem Meßsignal des letzten Abtastzeitpunktes gewonnenen Wahrscheinlichkeiten für das Auftreten der einzelnen Zustände bestimmt. Die Wertigkeiten, die den jeweiligen Werten bei der Verknüpfung zugeordnet werden, sind von den Prozeßparametern abhängig und werden vorzugsweise experimentell ermittelt.

Der in dem jeweiligen Abtastzeitpunkt zu messende Wert (Nutzsignal) wird aus den Wahrscheinlichkeiten für das Auftreten der einzelnen Zustände des für diesen Abtastzeitpunkt erhaltenen Modells berechnet. Als zu messender Wert kann der Zustand mit der höchsten Auftrittswahrscheinlichkeit gewählt werden; es ist jedoch auch möglich, den gemessenen Wert aus der mit den Wahrscheinlichkeiten mehrerer oder aller Zustände gewichteten Summe zu bestimmen, wobei der gemessene Wert dann nicht mehr nur einem bestimmten Zustand zugeordneten Wert entspricht, sondern jeden beliebigen Wert innerhalb des Meßbereichs annehmen kann.

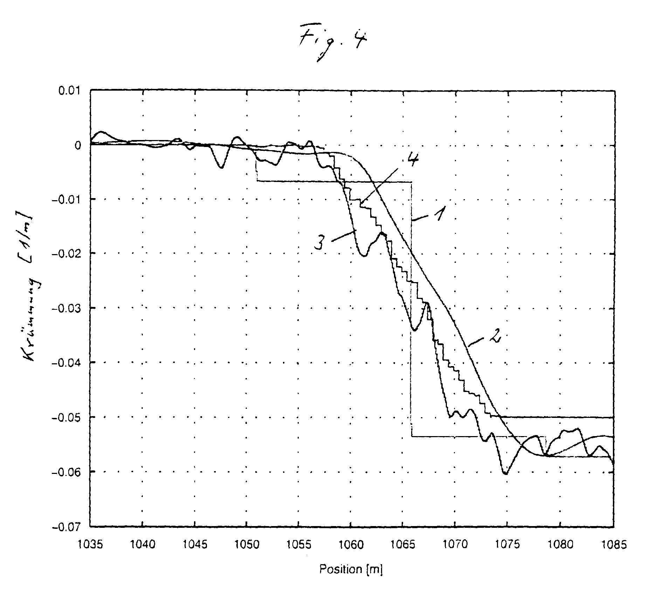

Fig. 4 zeigt Meßergebnisse des erfindungsgemäßen Verfahrens im Vergleich mit Meßergebnissen einer Standard-IIR-Filterung. Es ist die Krümmung des Fahrweges eines Schienenfahrzeugs in 1/m über einen Teil der Fahrstrecke in m aufgetragen. Die Kurve 1 stellt eine Referenzkurve dar, deren Verlauf die jeweiligen Meßergebnisse möglichst angenähert werden sollen (es handelt sich um eine theoretische Kurve, da Sprünge der Krümmung in der Praxis nicht vorkommen). Die Kurve 2 wurde durch IIR-Filterung des Meßsignals mit einer oberen Grenzfrequenz von 0,5 Hz und die Kurve 3 durch IIR-Filterung des Meßsignals mit einer oberen Grenzfrequenz von 1,0 Hz gewonnen. Die Kurve 4 wurde durch das erfindungsgemäße Verfahren erhalten. Diese Kurve hat einen unteren Grenzwert von -0,05/m, da im verwendeten Modell keine stärkeren Krümmungen vorgesehen waren. Der Vergleich der Kurven zeigt, daß die Kurve 3 deutlich größere Schwankungen als die Kurve 4 aufweist und daß die Kurve 2 gegenüber der Kurve 4 deutlich verzögert ist.

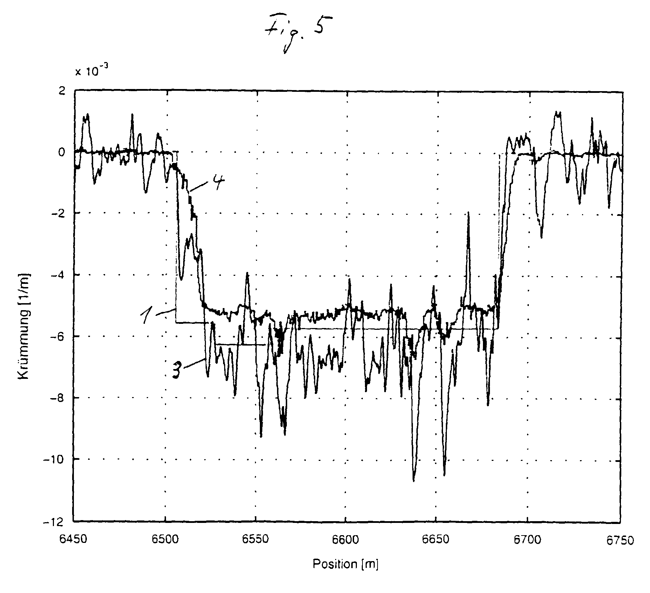

Fig. 5 zeigt ein Fig. 4 entsprechendes Diagramm, bei dem jedoch die Krümmung in einem größeren und die Fahrstrecke in einem kleineren Maßstab wiedergegeben sind und die Kurve 2 weggelassen ist. Die Kurven 3 und 4 haben etwa die gleiche Flankensteilheit, das heißt die gleiche Verzögerung gegenüber der Kurve 1. Es ist deutlich zu sehen, daß die Störunterdrückung bei der Kurve 4 erheblich größer als bei der Kurve 3 ist.

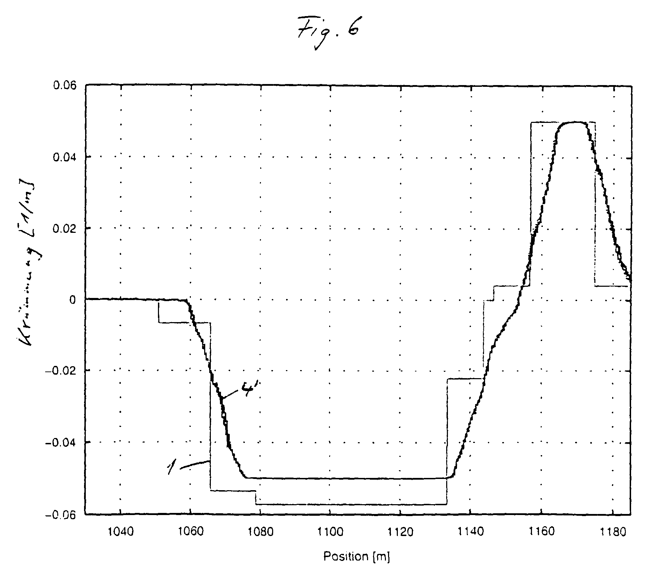

Fig. 6 schließlich gibt ein Beispiel für die Reproduzierbarkeit der Ergebnisse des erfindungsgemäßen Verfahrens. Die Kurve 4' besteht aus drei sich nahezu überdeckenden Kurven 4, die bei drei Versuchsfahrten eines Schienenfahrzeugs erhalten wurden. Es ist somit klar erkennbar, daß dieses Verfahren eine hohe Reproduzierbarkeit der zu messenden Größe ergibt.

Das erfindungsgemäße Verfahren wurde anhand eines Beispiels, bei dem die Krümmung von als Fahrweg für Schienenfahrzeuge dienenden Schienen ermittelt wird, näher erläutert. Es ist jedoch selbstverständlich, daß die Anwendung dieses Verfahrens nicht auf dieses Beispiel beschränkt ist, sondern das Verfahren grundsätzlich zur Filterung jedweder störbehafteter Signale eingesetzt werden kann.

## Patentansprüche

1. Verfahren zur probabilistischen Schätzung gestörter Meßwerte anhand eines Meßsignals, in welchem dem zu messenden Wert ein Störsignal überlagert ist, wobei dem zu messenden Wert ein definierter Meßbereich zugeordnet und das Meßsignal in vorgegebenen zeitlichen Abständen abgetastet wird,
**dadurch gekennzeichnet,**
daß der Meßbereich in diskrete Werte unterteilt wird, daß ein Modell eines dem Meßsignal zugrundeliegenden Prozesses mit diskreten Zuständen, die den diskreten Werten des Meßbereichs entsprechen, gebildet wird, bei welchem in jedem Abtastzeitpunkt jedem Zustand ein Wahrscheinlichkeitswert seines Auftretens zugeordnet wird, wobei anhand des Wahrscheinlichkeitswertes mindestens eines Zustandes der zu messende Wert ermittelt wird, daß jedem Zustand des Modells in einem Abtastzeitpunkt jeweils eine Wahrscheinlichkeit für das Verbleiben in diesem Zustand sowie für den Übergang in einen anderen Zustand bis zum nächsten Abtastzeitpunkt zugeordnet wird, und daß anhand des abgetasteten Wertes des Meßsignals in einem gegenwärtigen Abtastzeitpunkt, der Wahrscheinlichkeitswerte für das Auftreten der Zustände im vorhergehenden Abtastzeitpunkt und der Wahrscheinlichkeitswerte für jeden Zustand für das Verbleiben in diesem Zustand sowie für den Übergang in einen anderen Zustand zwischen den beiden Abtastzeitpunkten die Wahrscheinlichkeitswerte für das Auftreten der Zustände des Modells für den gegenwärtigen Abtastzeitpunkt neu berechnet werden.

2. Verfahren nach Anspruch 1, dadurch gekennzeichnet, daß dem abgetasteten Wert des Meßsignals zugeordnete Wahrscheinlichkeitswerte für das Auftreten der Zustände in einem Abtastzeitpunkt anhand einer Gauß-Funktion ermittelt werden.

3. Verfahren nach Anspruch 1 oder 2, dadurch gekennzeichnet, daß der zu messende Wert anhand des höchsten Wahrscheinlichkeitswertes für das Auftreten eines Zustandes im jeweiligen Abtastzeitpunkt ermittelt wird.

4. Verfahren nach Anspruch 1 oder 2, dadurch gekennzeichnet, daß der zu messende Wert anhand der mit den Wahrscheinlichkeiten für das Auftreten mehrerer Zustände im jeweiligen Abtastzeitpunkt gewichteten Summe ermittelt wird.

5. Verfahren nach einem der Ansprüche 1 bis 4, dadurch gekennzeichnet, daß der gemessene Wert im Meßsignal durch ein Analogsignal dargestellt wird.

6. Verfahren nach einem der Ansprüche 1 bis 5, dadurch gekennzeichnet, daß das Meßsignal durch einen Geschwindigkeitssensor eines Schienenfahrzeugs erzeugt wird.

7. Verfahren nach Anspruch 6, dadurch gekennzeichnet, daß das Meßsignal durch einen Drehgeschwindigkeitssensor (Kreiselsensor) für die Bewegung eines Schienenfahrzeugs erzeugt wird.

8. Verfahren nach Anspruch 6 oder 7, dadurch gekennzeichnet, daß die gemessenen Werte zur Bestimmung der Krümmung von als Trasse für Schienenfahrzeuge dienenden Schienen verwendet wird.
